# FASCICULE DE BREVET EUROPEEN

(11) **EP 1 629 720 B1**
(45) Date de publication et mention de la délivrance du brevet: **14.03.2007**
(21) Numéro de dépôt: 04019460.7
(22) Date de dépôt: 17.08.2004
(51) Int. Cl.: A23K 1/16

(54) **Additif alimentaire**
Futterzusatzmittel
Feed additive

(43) Date de publication de la demande: 01.03.2006
(73) Titulaire: LESAFFRE et Compagnie, 75001 Paris (FR)
(72) Inventeur: Auclair, Eric, 59710 Avelin (FR); Kalkhoven, David, 59000 Lille (FR); Termignon, Pascal, 59700 Marcq en Baroeul (FR); Bonanno, Laurent, Michel, 94500 Champigny s/ Mame (FR); Oriol, Eric, 94500 Champigny s/ Mame (FR)
(74) Mandataire: Gallois, Valérie

(56) Documents cités:
- EP-A- 0 164 848
- WO-A-01/89316
- US-A- 3 686 392
- DATABASE WPI Section Ch, Week 200223 Derwent Publications Ltd., London, GB; Class B04, AN 2002-175034 XP002308455 & JP 2001 340055 A (NIPPON SEISHI KK) 11 décembre 2001 (2001-12-11)
- HARTINI,S. , CHOCT.M., HINCH,G.N., NOLAN,J.V.: "Effect of diet composition and beak trimming on the incidence of cannibalism in laying hens" AUST.POULTRY SYMPOSIUM, no. 13, 2001, pages 216-219, XP001203979
- CHOCT,M., HARTINI,S., HINCH,G.N. & NOLAN, J.V.: "Dietary prevention of cannibalism in layers" AUST.POULTRY SYMPOSIUM, no. 14, 2002, page 157, XP001203980

## Description

La présente invention concerne la prévention et/ou le traitement de cannibalisme chez les animaux d'élevage.

De nos jours, l'élevage industriel moderne s'efforce de produire la plus grande quantité de viande, de lait et d'oeufs rapidement et à bon marché, dans des espaces réduits de production. Dans certains de ces élevages intensifs d'animaux, on peut observer des syndromes de type cannibalisme. Le terme « cannibalisme », tel qu'utilisé dans le présent contexte, n'est pas limité à des cas, en pratique, très rares de consommation d'un animal par des congénères. Dans le présent contexte, le terme « cannibalisme » concerne tout incident dans lequel un animal blesse un congénère en le mordant. Le terme « cannibalisme » couvre ainsi le piquage parfois observé dans l'élevage de volailles et parmi les poules pondeuses et la caudophagie (morsure de la queue et/ou des oreilles) parfois observée dans l'élevage de porcins.

De telles instances de cannibalisme nuisent au bien-être des animaux et réduisent le rendement de l'élevage.

Certains produits commerciaux visant à améliorer le bien-être animal sont disponibles sur le marché. Par exemple, le laboratoire vétérinaire Ceva Santé Animale a commercialisé en 2000, sous le nom de Suilence®, une phéromone visant à réduire la caudophagie dans l'élevage de porcins. L'acide ascorbique a également été utilisé comme complément alimentaire pour diminuer le cannibalisme chez les animaux d'élevage.

La présente invention concerne la constatation que, de manière surprenante, il est possible de prévenir et/ou de traiter (réduire) le cannibalisme chez les animaux d'élevage par l'administration aux dits animaux de 5'-nucléotides et/ou de peptides, lesdits peptides ayant un poids moléculaire d'au moins 1000 daltons, de préférence de 1000 à 10000 daltons. Derwent Pub. Ltd, London, AN 2002-175034 [23] & JP 2001 34 00 55 (NIPPON SEISHI KK) (2001-12-11), abrégé divulgue l'utilisation des 5'-nucléotides dans l'alimentation d'animeaux d'élevage pour augmenter leur envie de son nourrir et pour améliorer leur croissance et pour réduire leur mortalité.

Dans US-A-5188851, il a été proposé d'incorporer des 5'-nucléotides dans l'alimentation de poissons de culture pour augmenter leur envie de se nourrir.

Dans US-A-3686392, l'incorporation de 5'-nucleotides dans l'alimentation animale est proposée pour une gamme d'animaux d'élevage afin d'accélérer la croissance des animaux et d'améliorer l'efficacité de cette croissance par rapport à la quantité d'alimentation consommée.

Dans US-B-6248716 et US-B-6184208, de nombreux peptides sont proposés pour la modulation de processus physiologiques, tels que le gain de poids, la croissance de l'épithélium ou de cheveux et la cicatrisation, et pour stimuler des processus réparateurs et anaboliques, en tant qu'analgésiques et en tant que calmants.

La présente invention concerne la prévention et/ou la réduction du cannibalisme chez les animaux d'élevage par l'administration de 5'-nucléotides et/ou de peptides d'un poids moléculaire d'au moins 1000 daltons, de préférence de 1000 à 10000 daltons.

Les nucléotides sont des esters phosphoriques de nucléoside, comprenant obligatoirement :
- une base azotée purique ou pyrimidique,
- un pentose : le ribose ou le désoxyribose, et
- une ou plusieurs molécules d'acide phosphorique.

Dans le contexte de la présente invention, le terme « 5'-nucléotides » couvre les 5'-nucléotides en tant que tels, ainsi que leurs sels, hydrates, sels hydratés, et autres formes physiologiquement acceptables.

Dans le présent contexte, le terme « peptide » couvre les peptides en tant que tels, ainsi que leurs sels et autres formes physiologiquement acceptables.

Selon l'invention, les 5'-nucléotides sont ou comprennent avantageusement des ribonucléotides.

De manière utile, les 5'-nucléotides, et notamment les 5'-ribonucléotides, sont ou comprennent des 5'-nucléotides monophosphates.

Ils sont ou comprennent de préférence des mononucléotides.

Les 5'-nucléotides peuvent notamment être ou comprendre du 5'-IMP (inosine 5'-monophosphate), du 5'-GMP (guanosine 5'-monophosphate), du 5'-AMP (adénosine 5'-monophosphate), du 5'-UMP (uridine 5'-monophosphate) ou du 5'-CMP (cytidine 5'-monophosphate). Ces 5'-nucléotides sont de préférence utilisés en combinaison. Ils peuvent comprendre par exemple une combinaison de 5'-IMP avec un 5'-nucléotide du groupe formé par les 5'-GMP, 5'-AMP, 5'-UMP et 5'-CMP ; ou encore une combinaison du 5'-GMP avec un 5'-nucléotide choisi dans groupe formé par les 5'-AMP, 5'-UMP et 5'-CMP ; une combinaison de 5'-AMP avec du 5'-UMP ou du 5'-CMP ; ou encore une combinaison de 5'-UMP avec du 5'-CMP. Ils peuvent aussi comprendre une combinaison de 5'-IMP avec une des combinaisons du groupe formé par : le 5'-GMP et le 5'-AMP, le 5'-GMP et le 5'-UMP, le 5'-GMP et le 5'-CMP, le 5'-AMP et le 5'-UMP, le 5'-AMP et le 5'-CMP, le 5'-UMP et le 5'-CMP. Ils peuvent également comprendre une combinaison de 5'-GMP avec une combinaison du groupe formé par : le 5'-AMP et le 5'-UMP, le 5'-AMP et le 5'-CMP, et le 5'-UMP et le 5'-CMP. Ils peuvent aussi comprendre une combinaison de quatre des dits 5'-nucléotides ou encore une combinaison des cinq dits 5'-nucléotides. De préférence ils comprennent une combinaison de 5'-GMP, 5'-UMP, 5'-CMP et 5'-AMP ; ou une combinaison de 5'-GMP, 5'-UMP, 5'-CMP et 5'-IMP ; ou encore une combinaison de 5'-GMP, 5'-UMP, 5'-CMP, 5'-IMP et 5'-AMP.

Les 5'-nucléotides peuvent être obtenus par différents procédés de fabrication et de synthèse. Pour la présente invention, les 5'-nucléotides, et en particulier les exhausteurs de goût 5'-GMP et 5'-IMP, peuvent être obtenus par l'un quelconque de ces procédés.

Suivant une forme d'exécution préférée de l'invention, les 5'-nucléotides et/ou peptides sont, au moins partiellement et de préférence dans leur totalité, issus de cellules de levure, encore de préférence de cellules de levure du genre *Candida* ou du genre *Saccharomyces.* De préférence, lesdites cellules de levure appartiennent à l'espèce *Saccharomyces cerevisiae* ou à l'espèce *Candida utilis* (les espèces de *Candida* qui sont alimentaires sont vulgairement appelées *Torula* de manière générale).

L'invention concerne également l'apport à des animaux d'élevage d'un dérivé de levure, et en particulier un dérivé de levure contenant des 5'-nucléotides et/ou des peptides d'un poids moléculaire d'au moins 1000 daltons, de préférence de 1000 à 10000 daltons, notamment pour la prévention et/ou le traitement du cannibalisme chez les animaux d'élevage. Le dérivé de levure peut notamment être un hydrolysat enzymatique de levure et en particulier un extrait de levure, tel qu'un extrait de levure issu d'un hydrolysat enzymatique de levure par élimination de matières non-hydrosolubles.

Les 5'-nucléotides 5'-GMP et 5'-IMP sont connus pour leurs propriétés d'exhausteurs de goût particulièrement intéressantes. Il est notamment connu d'obtenir des extraits de levure à haute teneur en ces 5'-nucléotides et donc à effet exhausteur de goût par des procédés adaptés pour la fabrication d'extraits de levure.

En effet, dans les procédés conventionnels pour la fabrication d'extraits de levure qui comprennent une autolyse ou une hydrolyse enzymatique, essentiellement par les enzymes endogènes de la levure, l'acide ribonucléique (ARN) de la levure est principalement décomposé en nucléotides insipides comme l'adénosine 3'-monophosphate (3'-AMP) et la guanosine 3'-monophosphate (3'-GMP), en bases, riboses et phosphates. Ces enzymes endogènes de la levure sont essentiellement des ribonucléases, des 3'-nucléotidases spécifiques, des phosphatases acides.

Ces méthodes conventionnelles ne permettent donc pas d'obtenir des extraits de levure riches en 5'-nucléotides.

Des procédés adaptés pour l'obtention de dérivés de levure riche en 5'-nucléotides sont décrits dans l'ouvrage de référence « Yeast Technology » de G.Reed et T.W. Nagodawithana, 2ème édition (Van Nostrand Reinhold, ISBN 0-442 - 31892 - 8) pages 382 à 385.

Il est notamment connu de préparer des extraits de levure riches en 5'-nucléotides par hydrolyse enzymatique de levures en présence de 5'-phosphodiestérase avec désactivation des phosphatases et nucléases endogènes de la levure. On obtient ainsi des extraits de levure contenant les 5'-nucléotides suivants : 5'-GMP, 5'-UMP, 5'-CMP et 5'-AMP (correspondant aux quatre bases de l'ARN). Contrairement au 5'-GMP, le 5'-AMP n'est pas efficace comme exhausteur de goût. Toutefois, le 5'-AMP peut être converti en l'exhausteur de goût 5'-IMP par ajout d'AMP déaminase. On obtient ainsi un extrait de levure contenant du 5'-GMP, du 5'-UMP, du 5'-CMP, du 5'-IMP, et éventuellement encore une quantité résiduelle de 5'-AMP.

Parmi les procédés adaptés connus pour la fabrication de dérivés de levure riche en 5'-nucléotides, on peut également citer les procédés suivants :

Le brevet US-A-4 810 509 décrit un procédé de production d'extrait de levure riches en 5'-nucléotides comprenant (1) une étape de chauffage d'une suspension de levure entre 55°C et 70°C, (2) une étape d'autolyse des cellules de levure à pH 8 à 10, (3) un ajustement du pH de la suspension de levures autolysées entre 5 et 7, (4) une étape de chauffage de cette suspension à 90°C ou plus , (5) l'élimination du matériel insoluble de cette suspension chauffée et (6) la récupération de l'extrait de levure contenant des 5'-nucléotides. Un traitement réalisé après l'autolyse avec une enzyme 5'-adenylate déaminase (= AMP déaminase) permet de convertir le 5'-AMP en 5'-IMP qui est plus odorant donc plus recherché.

Le procédé selon EP-A-0299078 consiste à chauffer une suspension de levure contenant une grande quantité de RNA entre 80°C et 120 °C (destruction des ribonucléases), puis à extraire les RNA avec un traitement alcalin et à les découper en 5'-nucléotides par l'action d'une 5'-phosphodiestérase, et optionnellement d'une déaminase afin d'obtenir un extrait riche en 5'-GMP et 5'-IMP.

L'invention concerne notamment la prévention et/ou le traitement du cannibalisme chez les animaux d'élevage par l'administration aux dits animaux d'un dérivé de levure, ledit dérivé de levure pouvant être un hydrolysat enzymatique de levure contenant des membranes et/ou fragments de membranes non-hydrosolubles des cellules de levure, ou un extrait de levure obtenu à partir d'un hydrolysat enzymatique de levure par élimination desdits membranes et fragments de membranes, et en particulier un tel dérivé de levure contenant des 5'-nucléotides et/ou des peptides à poids moléculaire d'au moins 1000 daltons, de préférence de 1000 à 10000 daltons . De tels dérivés de levure peuvent notamment être obtenus par les procédés cités ci-dessus favorisant la formation de 5'-nucléotides.

Les dérivés de levure ont, de manière utile, un taux de dégradation exprimé par le rapport N aminé /N total, inférieur ou égal à 40%, de préférence de 25% à 40%. « N » est le symbole de l'azote. « N total » est la teneur en azote mesurée selon la méthode de Kjeldahl et « N aminé » est la teneur en azote mesurée par la titration de l'azote formol selon Sørensen.

Les dérivés de levure contenant des 5'-nucléotides et/ou des peptides d'au moins 1000 daltons, et notamment de 1000 à 10000 daltons, sont de préférence des dérivés de *Candida* ou *Saccharomyces,* et encore de préférence des dérivés de *Saccharomyces cerevisiae* ou de *Candida utilis.*

La levure est de préférence une levure de boulangerie. Une levure de boulangerie est une levure appartenant au genre *Saccharomyces,* fabriquée à l'aide essentiellement d'une multiplication ou culture aérobie comme enseigné dans le chapitre 6 « Baker's yeast production » de l'ouvrage de référence « Yeast technology » cité ci-dessus .

La levure peut également être une levure de brasserie, une levure oenologique ou une levure de distillerie, qui sont des sous-produits de la fabrication de la bière, du vin, respectivement de l'alcool et qui ont donc servi à fabriquer de la bière, du vin, ou de l'alcool avant leur récupération pour en faire un dérivé de levure contenant des 5'-nucléotides et/ou des peptides d'un poids moléculaires d'au moins 1000 daltons.

Les dérivés de levure présentent avantageusement une teneur en 5'-nucléotides sur matières sèches d'au moins 2% en masse, de préférence d'au moins 3% en masse, encore de préférence d'au moins 4% en masse et encore plus de préférence d'au moins 5% en masse, et/ou une teneur sur matières sèches en peptides à poids moléculaire de 1000 à 10000 daltons, d'au moins 4% en masse, de préférence d'au moins 6% en masse et encore de préférence d'au moins 8% en masse.

Suivant l'invention, les dérivés de levure contenant des 5'-nucléotides et/ou des peptides à masse moléculaire d'au moins 1000 daltons peuvent présenter une teneur en matière sèche d'au moins 90% en masse, de préférence, d'au moins 94% en masse et encore de préférence d'au moins 96% en masse.

La présente invention est efficace pour la prévention et/ou le traitement du cannibalisme chez un grand nombre d'animaux d'élevage tels que les bovins, les ovins, les porcins et la volaille. Elle concerne en particulier la prévention et/ou le traitement de piquage chez la volaille, en particulier chez les gallinacés, ainsi que la prévention et/ou la réduction de caudophagie chez les porcins. Les gallinacés sont de préférence choisis parmi les coqs, chapons, poules, poulets, pintades, dindes et leurs poussins, tels que notamment les coqs, chapons, poules et poulets à chair et les poules pondeuses. Les porcins sont de préférence choisis parmi les truies et les porcs à chair.

Suivant l'invention, les 5'-nucléotides et/ou peptides d'un poids moléculaire d'au moins 1000 daltons, de préférence de 1000 à 10000 daltons, sont avantageusement administrés aux animaux par voie orale. Ils peuvent être administrés sous différentes formes ou présentations, notamment sous forme solide -comme notamment sur un support granulaire, tel qu'une farine d'alimentation animale, ou sous forme de granules- ou liquide -de préférence à base d'eau-, seuls ou en combinaison avec d'autres ingrédients, comme, par exemple, un ou plusieurs autres ingrédients alimentaires et/ou un ou plusieurs autres ingrédients nutritionnels comme un ou plusieurs minéraux alimentaires et/ou une ou plusieurs vitamines, et/ou incorporés dans les boissons ou dans l'alimentation principale.

Ainsi, suivant l'invention, les 5'-nucléotides et/ou peptides sur support granulaire peuvent être incorporés dans des farines pour poules pondeuses ou poulets de chair ou dans des farines pour porcins, et la préparation sous forme de granules peut être incorporée dans des mélanges à base de grains ou céréales concassés et/ou entiers pour volailles, comme notamment les mélanges pour poules pondeuses. La préparation peut également être une partie de la composition d'un aliment pour l'alimentation animale sous forme extrudée, par exemple d'un aliment pour porcins.

Pour la prévention et/ou le traitement de la caudophagie chez les porcins, les 5'-nucléotides sont de préférence administrés en une quantité d'au moins 0,1g par animal par semaine, encore de préférence d'au moins 0,2g par semaine et animal, et plus de préférence encore d'au moins 0,4g par semaine et animal. Les peptides d'au moins 1000 daltons, avantageusement de 1000 à 10000 daltons, sont de préférence administrés en une quantité d'au moins 0,15g par semaine et animal, encore de préférence d'au moins 0,30g et plus de préférence encore d'au moins 0,60g par semaine et animal.

Pour la prévention et/ou le traitement du piquage chez les coqs, poules ou poulets, les 5'-nucléotides sont de préférence administrés en une quantité d'au moins 0,001g par semaine et animal, encore de préférence d'au moins 0,002g par semaine et animal, et plus de préférence encore d'au moins 0,003g par semaine et animal. Les peptides d'au moins 1000 daltons, avantageusement de 1000 à 10000 daltons, sont de préférence administrés en une quantité d'au moins 0,002g par semaine et animal, encore de préférence d'au moins 0,003g et plus de préférence encore d'au moins 0,004g par semaine et animal.

La présente invention concerne également l'utilisation de 5'-nucléotides et/ou peptides d'au moins 1000 daltons, de préférence de 1000 à 10000 daltons, pour la fabrication d'une préparation pour la prévention et/ou le traitement du cannibalisme chez les animaux d'élevage.

De manière utile, au moins un 5'-nucléotide choisi dans le groupe de 5'-IMP, 5'-GMP, 5'-AMP, 5'-UMP ou 5'-CMP est utilisé pour cette fabrication. Ils sont de préférence utilisés en combinaison. Par exemple, on peut utiliser une combinaison de 5'-IMP avec un 5'-nucléotide choisi dans le groupe formé par les 5'-GMP, 5'-AMP, 5'-UMP et 5'-CMP. On peut aussi utiliser une combinaison de 5'-GMP avec un 5'-nucléotide choisi dans le groupe formé par les 5'-AMP, 5'-UMP et 5'-CMP. On peut également utiliser une combinaison de 5'-AMP avec du 5'UMP ou du 5'-CMP ou encore une combinaison de 5'-UMP avec du 5'-CMP. Une combinaison de 5'-IMP avec une combinaison du groupe formé par : le 5'-GMP et le 5'-AMP, le 5'-GMP et le 5'-UMP, le 5'-GMP et le 5'-CMP, le 5'-AMP et le 5'-UMP, le 5'-AMP et le 5'-CMP, le 5'-UMP et le 5'CMP est également possible. Une autre possibilité est une combinaison de 5'-GMP avec une combinaison du groupe formé par : le 5'-AMP et le 5'-UMP, le 5'AMP et le 5'CMP, le 5'-UMP et le 5'-CMP. On peut aussi utiliser une combinaison de quatre des dits 5'-nucléotides ou encore une combinaison des cinq dits 5'-nucléotides. De préférence on utilise une combinaison de 5'-GMP, 5'-UMP, 5'-CMP et 5'-AMP ; une combinaison de 5'-GMP, 5'-UMP, 5'-CMP et 5'-IMP ; ou une combinaison de 5'-GMP, 5'-UMP, 5'-CMP, 5'-IMP et 5'-AMP.

L'invention concerne aussi l'utilisation, pour la fabrication d'une préparation pour la prévention et/ou le traitement du cannibalisme chez les animaux d'élevage, d'un dérivé de levure, ledit dérivé pouvant être un hydrolysat enzymatique de levure contenant des membranes et/ou fragments de membranes non-hydrosolubles des cellules de levure, ou un extrait de levure obtenu à partir d'un hydrolysat enzymatique de levure par élimination desdits membranes et fragments de membranes, et en particulier un tel dérivé de levure contenant des 5'-nucléotides et/ou des peptides à poids moléculaire d'au moins 1000 daltons. De tels dérivés de levure peuvent notamment être obtenus par les procédés cités ci-dessus favorisant la formation de 5'-nucléotides.

La levure appartient de préférence au genre *Saccharomyces* ou *Candida*. Des levures appartenant aux espèces *Saccharomyces cerevisiae* et *Candida utilis* sont préférées. Les espèces appartenant au genre *Candida* qui sont alimentaires sont souvent appelées *Torula, Torula* étant donc partiellement synonyme de *Candida*. La levure peut notamment être une levure choisie dans le groupe des levures de boulangerie, levures de brasserie, levures oenologiques et levures de distillerie, et plus de préférence une levure de boulangerie.

De manière avantageuse, ledit dérivé de levure contient au moins 2% en masse, de préférence au moins 3% en masse, encore de préférence au moins 4% en masse et encore plus de préférence au moins 5% en masse de 5'-nucléotides sur matières sèches, et/ou au moins 4% en masse, de préférence au moins 6% en masse, et encore de préférence au moins 8% en masse de peptides de 1000 à 10000 daltons sur matières sèches.

La préparation peut en particulier être une préparation pour la prévention et/ou le traitement du cannibalisme chez des animaux d'élevage choisis parmi les bovins, les ovins, les porcins et la volaille.

Ainsi, la préparation peut être une préparation pour la prévention et/ou le traitement de la caudophagie chez les porcins, comme notamment les truies, les porcs à chair et les porcelets à chair.

La préparation peut également être une préparation pour la prévention et/ou le traitement du piquage chez la volaille, en particulier chez les gallinacés tels que les gallinacés choisis parmi les coqs, les chapons, les poules, les poulets, les dindes, les pintades et leurs poussins, de préférence chez les gallinacés choisis parmi les coqs à chair, les chapons à chair, les poulets à chair et les poules pondeuses.

De manière utile, la préparation est une préparation pour administration orale aux animaux d'élevage.

Ainsi, la préparation peut être une préparation solide, telle qu'une préparation sur support solide granuleux, par exemple une farine d'alimentation animale, ou sous forme de granules, y compris les granules obtenus par extrusion.

La préparation peut également être sous forme liquide, de préférence à base d'eau.

La présente invention concerne également les préparations pouvant être obtenues par les procédés de fabrication suivant l'invention, et les produits alimentaires et les boissons pour animaux les contenant.

De tels produits alimentaires sont, par exemple, des farines pour porcins, les farines pour poussins, poulets ou poules pondeuses, les mélanges à base de grains ou céréales concassés et/ou entiers pour volailles, tels que des mélanges pour poules pondeuses, des blocs à lécher et des blocs à picoter.

Les préparations, les produits alimentaires et les boissons suivant l'invention peuvent également comprendre un ou plusieurs minéraux alimentaires et/ou une ou plusieurs vitamines.

L'invention peut à la fois être préventive en empêchant les problèmes de cannibalisme et de piquage d'apparaître dans un élevage, et curative en permettant de les diminuer de façon significative dès leur apparition, voire de les éliminer. Un avantage important de la présente invention est que le résultat peut être réalisé sans l'administration aux animaux de produits vétérinaires susceptibles de laisser des traces dans la viande et/ou les oeufs, comme notamment les antibiotiques.

La présente invention est illustrée ci-après au moyen d'un extrait de levure riche en 5'-nucléotides.

### EXEMPLE 1

### Composition de l'extrait de levure « EXL »

L'extrait de levure EXL utilisé dans les exemples 2 et 3 est un extrait de levure obtenu par hydrolyse enzymatique d'une levure de l'espèce *Saccharomyces cerevisiae* et élimination de la partie non-hydrosoluble. Cet extrait de levure donne à 5% dans l'eau chaude une solution présentant une légère opalescence. Il se présente sous forme d'une poudre microgranulée permettant sa manipulation sans poussière.

Cet extrait de levure contient environ 10% en masse de peptides entre 1000 daltons et 10000 daltons.

Ses propriétés principales sont données dans le tableau 1.

Des extraits de levure de ce type sont usuels dans le commerce et entre autres peuvent être achetés auprès de la société Bio Springer, 94701 Maisons-Alfort, France, étant entendu que les principaux fabricants mondiaux d'extraits de levure sont fournisseurs à l'intérieur de leur gamme d'hydrolysats de levure et d'extraits de levure d'un extrait de levure de ce type.

**Tableau 1**

| | |
|---|---|
| | |
| Teneur en matières sèches (MS) | 96 % en masse |
| Azote total (N total tel que défini ci-dessus, méthode de Kjeldahl) | 11,3 % en masse |
| Azote aminé (N aminé tel que défini ci-dessus, titration selon Sørensen) | 4,1 % en masse |
| Taux de dégradation | 36 % |
| Protéines (azote total x 6,25) | 70,6 % en masse |
| lipides | 0 % en masse |
| Vitamines | |
| B 1 (thiamine) | 13 ppm |
| B2 (riboflavine) | 75 ppm |
| B5 (calcium pantothenate) | 140 ppm |
| B6 (pyroscidine) | 70 ppm |
| PP (niacin) | 450 ppm |
| B 12 (cyanocobalamine) | 10 µg/kg |
| Acides aminés libres^{a} | 16, 05% en masse |
| Acides aminés totaux^{a} | 55, 21 % en masse |
| 5'-nucléotides totaux^{a} | 6,8 % en masse |
| 5'-CMP^{a} | 0,68 % en masse |
| 5'-UMP^{a} | 1,95 % en masse |
| 5'-GMP^{a} | 1,97 % en masse |
| 5'-IMP^{a} | 2,20 % en masse |

| | |
|---|---|
| a : quantité déterminée en % en masse sur matières sèches | |

### EXAMPLE 2

### Effets de l' extrait de levure EXL sur l'occurrence de caudophagie chez les porcs.

Dans un atelier d'engraissement de porcs à risque de caudophagie connu et récurrent, on apporte l'extrait de levure EXL dans l'eau de boisson pendant 3 semaines consécutives sur la base de 2,25 g/jour/porc à raison de 3 jours par semaine. L'apport des extraits de levure n'a eu lieu qu'après que des problèmes de caudophagie aient été constatés. Au bout de 3 semaines, on constate que l'apport de l'extrait de levure EXL a divisé l'occurrence de la caudophagie par un facteur supérieur à deux.

### EXEMPLE 3

### Effet de l'extrait de levure EXL sur la mortalité des poules pondeuses due au piquage

L'effet de l'extrait de levure EXL sur la mortalité des poules pondeuses a été évalué de la 19^{ème} à la 30^{ème} semaine d'âge dans un élevage intensif.

800 poules pondeuses (souche Isa Brown) élevées en cage avec une densité de 5 poules pondeuses par cage ont été nourries avec un aliment à base de blé dont la composition est indiqué dans le tableau 2.

Le dispositif expérimental mis en place lors de cet expérience a été le suivant :
- 400 poules pondeuses sans supplémentation (témoin),
- 400 poules pondeuses supplémentées avec EXL,

L'extrait de levures EXL a été apporté dans l'eau de boisson pendant 12 semaines sur la base de 50 g pour 1000 poules par semaine.

Les conditions sanitaires de cet essai ont été de bonne qualité.

Le tableau 3 présente l'effet de l'extrait de levure EXL sur le pourcentage de mortalité des poules pondeuses.

On constate que la supplémentation en extrait de levure EXL a un effet positif significatif sur la réduction du taux de mortalité des poules pondeuses par rapport au témoin. L'inspection des cadavres montrait que l'extrait de levure EXL non seulement réduit la mortalité des poules, mais entraîne également une réduction importante du pourcentage de cadavres manifestant des lésions dues au piquage.

Cet essai montre clairement que l'extrait de levure EXL est efficace pour réduire la mortalité des poules pondeuses liée au phénomène de piquage.

**Tableau 2 : Composition et caractéristiques nutritionnelles de l'aliment (en % en masse sur matières sèches)**

| **Ingrédients** | **%** |
|---|---|
| Blé | 68,4 |
| Huile de soja | 0,9 |
| Tourteau de soja 44 | 19,9 |
| DL-méthionine | 0,109 |
| Carbonate de calcium | 8,189 |
| Phosphate bicalcique | 1,742 |
| Prémix | 0,400 |

| **Composition nutritionnelle calculée** | |
|---|---|
| EM (kcal/kg) | 2650 |
| Protéines (%) | 16,8 |
| Phosphore disponible (%) | 0,4 |

**Tableau 3 : Effet de l'extrait de levure EXL sur la mortalité des poules**

| Traitement | Taux de mortalité (%) |
|---|---|
| Témoin | 5,1 |
| EXL | 2,2 |

## Revendications

1. Utilisation de 5'-nucléotides pour la fabrication d'une préparation pour la prévention et/ou le traitement du cannibalisme chez des animaux d'élevage.

2. Utilisation suivant la revendication 1 d'au moins un 5'-nucléotide choisi dans le groupe de 5'-IMP, 5'-GMP et 5'-AMP, 5'-UMP et 5'-CMP, de préférence d'une combinaison d'au moins deux desdits 5'-nucléotides et encore de préférence d'une combinaison de trois des dits 5'-nucléotides, et plus de préférence encore d'une combinaison de quatre ou cinq des dits 5'-nucléotides.

3. Utilisation suivant la revendication 1 ou 2, dans laquelle au moins une partie et de préférence la totalité des 5'-nucléotides proviennent d'un dérivé de levure contenant des 5'-nucléotides, de préférence sous forme d'un hydrolysat enzymatique de levure contenant des 5'-nucléotides, et encore de préférence sous forme d'un extrait de levure contenant des 5'-nucléotides.

4. Utilisation suivant la revendication 3, dans laquelle la levure appartient au genre *Saccharomyces* ou *Candida,* et de préférence à l'espèce *Saccharomyces cerevisiae* ou à l'espèce *Candida utilis*.

5. Utilisation suivant l'une quelconque des revendications 3 et 4, dans laquelle la levure est une levure choisie dans le groupe des levures de boulangerie, levures de brasserie, levures oenologiques et levures de distillerie, de préférence la levure est une levure de boulangerie.

6. Utilisation suivant l'une quelconque des revendications 3 à 5, dans laquelle le dérivé de levure contient au moins 2% en masse, de préférence au moins 3% en masse, encore de préférence au moins 4% en masse et encore plus de préférence au moins 5 % en masse de 5'-nucléotides sur matières sèches.

7. Utilisation suivant l'une quelconque des revendications 1 à 6 de 5'-nucléotides dans laquelle les animaux d'élevage sont choisis parmi les bovins, les ovins, les porcins et la volaille.

8. Utilisation suivant les revendications 1 à 7 de 5'-nucléotides dans laquelle la préparation est une préparation pour la prévention et/ou le traitement de la caudophagie chez les porcins, et de préférence chez des porcins choisis parmi les truies, les porcs à chair et les porcelets à chair.

9. Utilisation suivant l'une quelconque des revendications 1 à 7, dans laquelle la préparation est une préparation pour la prévention et/ou le traitement du piquage chez les gallinacés, et de préférence chez les gallinacés choisis parmi les coqs, chapons, poules, poulets, dindes, pintades et leurs poussins, encore de préférence chez les gallinacés choisis parmi les coqs à chair, les chapons à chair, les poules à chair, les poulets à chair et les poules pondeuses.

10. Utilisation suivant l'une quelconque des revendications précédentes, dans laquelle la préparation est une préparation pour administration orale.

11. Utilisation suivant la revendication 10, dans laquelle la préparation est une préparation solide, de préférence sous forme d'une poudre ou sous forme de microgranules ou sous forme de granules ou particules.

12. Utilisation suivant l'une quelconque des revendications 1 à 10, dans laquelle la préparation est liquide, de préférence à base d'eau.

## Claims

1. Use of 5'-nucleotides for the manufacture of a preparation for the prevention and/or the treatment of the cannibalism in livestock..

2. Use according to claim 1 of at least one 5'-nucleotide selected from the group consisting of 5'-IMP, 5'-GMP, 5'-AMP, 5'-UMP and 5'-CMP, preferably of a combination of at least two of said 5'-nucleotides, and more preferably of a combination of three of said 5'-nucleotides and still more preferably of a combination of four or five of said 5'-nucleotides.

3. Use according to claim 1 or 2, wherein at least a part and preferably the whole of the 5'-nucleotides comes from a yeast derivative containing 5'-nucleotides, preferably as a yeast enzymatic hydrolysate containing 5'-nucleotides, and more preferably as a yeast extract containing 5'-nucleotides.

4. Use according to claim 3, wherein the yeast belongs to *Saccharomyces* or *Candida* genus, and preferably *Saccharomyces cerevisiae* or *Candida utilis.*

5. Use according to anyone of claims 3 and 4, wherein the yeast is a yeast selected from the group consisting of the baker's yeasts, the brewer's yeasts, the wine yeasts and the distillers' yeasts, preferably the yeast is a baker's yeast.

6. Use according to anyone of claims 3 to 5, wherein the yeast derivative contains at least 2 % in weight, preferably at least 3 % in weight, more preferably at least 4 % in weight and still more preferably at least 5 % in weight of 5'-nucleotides on dry matters.

7. Use according to anyone of claims 1 to 6 of 5'-nucleotides, wherein the livestock is selected from bovine, ovine, porcine, and poultry.

8. Use according to claims 1 to 7 of 5'-nucleotides, wherein the preparation is a preparation for the prevention and/or the treatment of the caudophagia in porcine, and preferably in porcine selected from sow, flesh pigs and flesh piglets

9. Use according to anyone of claims 1 to 7, wherein the preparation is a preparation for the prevention and/or the treatment of the pecking in gallinaceous birds, and preferably in gallinaceous birds selected from roosters, capons, hens, chickens, turkeys, guinea fowls and their chicks, more preferably in gallinaceous birds selected from flesh roosters, flesh capons, flesh hens, flesh chickens, and laying hens.

10. Use according to anyone of preceding claims, wherein the preparation is a preparation for oral administration.

11. Use according to claim 10, wherein the preparation is a solid preparation, preferably as powder, microgranules, granules or particles.

12. Use according to anyone of claims 1 to 10, wherein the preparation is liquid, preferably water-based.

## Patentansprüche

1. Verwendung von 5'-Nucleotiden zur Herstellung eines Präparats für die Prävention und/oder Behandlung des Kannibalismus bei Zuchttieren.

2. Verwendung nach Anspruch 1 mindestens eines 5'-Nucleotids, ausgewählt aus der Gruppe, die besteht aus 5'-IMP, 5'-GMP und 5'-AMP, 5'-UMP und 5'-CMP, vorzugsweise einer Kombination von mindestens zwei der genannten 5'-Nucleotide und besonders bevorzugt einer Kombination von drei der genannten 5'-Nucleotide und ganz besonders bevorzugt einer Kombination von vier oder fünf der genannten 5'-Nucleotide.

3. Verwendung nach Anspruch 1 oder 2, bei der mindestens ein Teil und vorzugsweise die Gesamtmenge der 5'-Nucleotide aus einem 5'-Nucleotide enthaltenden Hefederivat stammt, vorzugsweise in Form eines enzymatischen Hydrolysats von Hefe, das 5'-Nucleotide enthält, und besonders bevorzugt in Form eines Hefeextrakts, der 5'-Nucleotide enthält, vorliegt.

4. Verwendung nach Anspruch 3, bei der die Hefe zu dem Genus Saccharomyces oder Candida und vorzugsweise zu der Species Saccharomyces cerevisiae oder Candida utilis gehört.

5. Verwendung nach einem der Ansprüche 3 und 4, bei der die Hefe eine Hefe ist, die ausgewählt ist aus der Gruppe der Bäckerhefen, der Bierhefen, der Weinhefen und der Destillationshefen, vorzugsweise die Hefe eine Bäckerhefe ist.

6. Verwendung nach einem der Ansprüche 3 bis 5, bei der das Hefederivat mindestens 2 Massenprozent, vorzugsweise mindestens 3 Massenprozent, besonders bevorzugt mindestens 4 Massenprozent und ganz besonders bevorzugt mindestens 5 Massenprozent 5'-Nucleotide, als Trockenmaterial, enthält.

7. Verwendung nach einem der Ansprüche 1 bis 6 von 5'-Nucleotiden, bei der die Zuchttiere ausgewählt werden aus der Gruppe der Rinder, Schafe, Schweine und Geflügel.

8. Verwendung nach einem der Ansprüche 1 bis 7 von 5'-Nucleotiden, bei der das Präparat ein Präparat für die Prävention und/oder Behandlung der Caudophagie bei Schweinen und vorzugsweise bei Schweinen, die ausgewählt sind aus der Gruppe der Mutterschweine, der Mastschweine und der Mastferkel, ist.

9. Verwendung nach einem der Ansprüche 1 bis 7, bei der das Präparat ein Präparat für die Prävention und/oder Behandlung des Pickens bei Hühnervögeln und vorzugsweise bei Hühnervögeln, die ausgewählt sind aus der Gruppe der Hähnchen, Kapaune, Hennen, Hühnchen, Truthähne, Perlhühner und ihren Küken, besonders bevorzugt bei Hühnervögeln, die ausgewählt sind aus der Gruppe der Masthähnchen, Mastkapaune, Masthennen, Masthühnchen und Legehennen, ist.

10. Verwendung nach einem der vorhergehenden Ansprüche, bei der das Präparat ein Präparat für die orale Verabreichung ist.

11. Verwendung nach Anspruch 10, bei der das Präparat ein festes Präparat, vorzugsweise ein Pulver oder ein Mikrogranulat ist oder in Form von Körnchen oder Teilchen vorliegt.

12. Verwendung nach einem der Ansprüche 1 bis 10, bei der das Präparat flüssig ist, vorzugsweise eine Flüssigkeit auf Wasserbasis ist.
